# DEMANDE DE BREVET EUROPEEN

(11) **EP 1 333 413 A2**
(43) Date de publication de la demande: **06.08.2003**
(21) Numéro de dépôt: 03075073.1
(22) Date de dépôt: 13.01.2003
(51) Int. Cl.: G09B 29/00

(54) **Carte pliante revêtue à production facilitée**

(30) Priorité: 16.01.2002 MC 2480
(71) Demandeur: Compagnie Generale d'Edition, 98000 Monaco (MC)
(72) Inventeur: Ballio, Laura, 98000 Monaco (MC)
(74) Mandataire: De Gregori, Antonella

(57) **Abrégé**

Une carte (10) pliante revêtue à production facilitée et un procédé pour sa fabrication sont décrits. Dans ceux-ci, la carte (10) comprend une pluralité de parties (12) en forme de quadrilatère, et, en disposant les unes contre les autres les parties (12), on obtient une représentation complète, incluant des indications topographiques d'un lieu déterminé, ces parties (12) étant disposées avec un espace intermédiaire (14) entre elles. Les parties (12) et les espaces intermédiaires (14) sont recouverts par un revêtement inférieur et un revêtement supérieur en matériau transparent, et, de plus, les parties (12) adjacentes sont réunies entre elles par l'intermédiaire d'éléments de liaison (16).

## Description

La présente invention concerne une carte pliante revêtue à production facilitée.

L'invention concerne de plus un procédé de fabrication de cette carte.

Dans les cartes sont représentées des indications topographiques d'un lieu déterminé, qui mettent en évidence, selon les cas, les aspects qu'il est intéressant de détailler.

Par exemple, dans les cartes routières, l'accent est mis sur les voies de communication, tandis que, dans les cartes touristiques d'une ville, ce sont aussi les bâtiments d'intérêt artistique et culturel qui sont mis en évidence.

Les cartes connues ont des dimensions généralement rectangulaires et sont imprimées sur des supports en papier ou en carton.

Pour en améliorer la facilité d'utilisation, elles sont vendues pliées sur elles-mêmes afin d'obtenir une dimension, généralement rectangulaire, permettant de les transporter aisément.

Cependant, les supports sur lesquels elles sont imprimées font que ces cartes s'abîment à l'usage assez rapidement.

Si l'on considère de plus qu'elles sont ouvertes et repliées avec une certaine fréquence, il s'ensuit souvent qu'elles tendent à se déchirer le long des lignes de pliage.

Pour augmenter leur durée de vie, il est conseillé de les replier selon les directions de pliage utilisées par le fabricant.

On a ensuite pensé à recouvrir ces cartes avec un matériau transparent, toujours dans le but de les maintenir en bon état et lisibles le plus longtemps possible.

Le matériau transparent est communément du type matière plastique, ce pour quoi ces cartes sont également dites plastifiées ; on fait adhérer ce revêtement sur les deux faces du papier ou du carton.

Avec un tel revêtement, il est également possible de tracer, avec des stylos feutres appropriés, des signaux d'indication sur la carte, ceux-ci pouvant ensuite être facilement effacés.

En outre, pour opposer une moindre résistance au pliage, le support imprimé de ces cartes peut être subdivisé en parties, généralement rectangulaires ; ensuite, ces parties sont reliées entre elles par l'intermédiaire du revêtement lui-même, en faisant en sorte qu'il existe entre les parties adjacentes un certain espace.

En correspondance avec lesdits espaces sont réalisées, au moins en partie, les lignes de pliage de la carte, ce qui fait qu'il en résulte une ouverture et un repliage facilités. Dans ce cas également, il est conseillé d'effectuer le repliage selon les directions de pliage utilisées par le fabricant.

Les cartes plastifiées présentent cependant des problèmes liés aux coûts de production élevés.

En fait, il n'est pas facile d'obtenir un bon compromis entre un positionnement correct et précis des parties de la carte et une vitesse économiquement acceptable d'une chaîne de production.

Le but de la présente invention est donc de remédier aux inconvénients précédemment mentionnés, et, en particulier, de réaliser une carte pliante revêtue à production facilitée qui permet une réduction notable des coûts de fabrication.

Un autre but de la présente invention est de réaliser une carte pliante revêtue à production facilitée qui se prête à un repliage et à une ouverture consécutive faciles, limitant la possibilité d'abîmer celle-ci de façon correspondante aux lignes de pliage.

Un autre but de la présente invention est de réaliser une carte pliante revêtue à production facilitée particulièrement simple, durable et fonctionnelle.

Un but suivant de la présente invention est d'indiquer un procédé de fabrication pour réaliser une telle carte pliante revêtue.

Ces buts selon la présente invention, ainsi que d'autres, seront obtenus en réalisant une carte pliante revêtue à production facilitée selon la revendication 1.

D'autres caractéristiques sont prévues dans les revendications suivantes.

Les caractéristiques et les avantages d'une carte pliante revêtue à production facilitée selon la présente invention seront principalement mis en évidence par la description qui suit, donnée à titre d'exemple et non limitative, se référant aux dessins schématiques joints, dans lesquels :

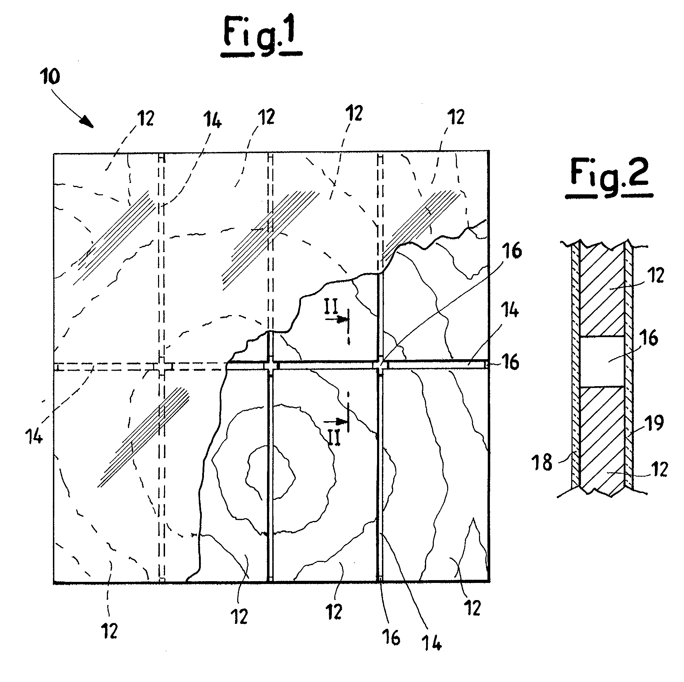

la figure 1 est une vue en plan de dessus, partiellement écorchée, d'une carte pliante revêtue à production facilitée selon l'invention ;
la figure 2 est une vue en coupe, selon le plan de tracé II-II de la figure 1, d'un détail de la carte pliante revêtue de la figure 1 ;
la figure 3 montre un schéma d'un procédé de fabrication de la carte pliante revêtue de la figure 1.

Si l'on se réfère aux figures, on trouve représentée une carte pliante revêtue, indiquée dans sa globalité en 10.

Dans l'exemple illustré, selon la présente invention, la carte 10 a une forme de quadrilatère, et, plus précisément, une forme rectangulaire, et comprend un ensemble de parties 12, qui sont par exemple rectangulaires, et en papier ou en carton ou en matériaux pouvant être imprimés d'une façon quelconque.

En disposant les parties 12 les unes contre les autres, on obtient une représentation complète d'indications topographiques d'un lieu déterminé.

En réalité, les bords des parties 12 adjacentes ne sont pas exactement disposés les uns contre les autres, mais il est prévu des espaces intermédiaires 14, verticaux et horizontaux.

Les parties 12 se trouvent d'une quelconque façon réunies entre elles au moyen d'éléments de liaison 16, se présentant sous la forme d'appendices ou de bretelles, disposés par exemple en correspondance avec les sommets des parties 12 rectangulaires.

D'une autre façon, ces éléments de liaison 16 peuvent également être disposés dans des positions différentes des sommets des parties 12 rectangulaires, par exemple à proximité du centre des bords adjacents des parties 12.

La carte 10 comprend en outre un revêtement supérieur 19 et un revêtement inférieur 18 en un matériau transparent, par exemple du polyéthylène.

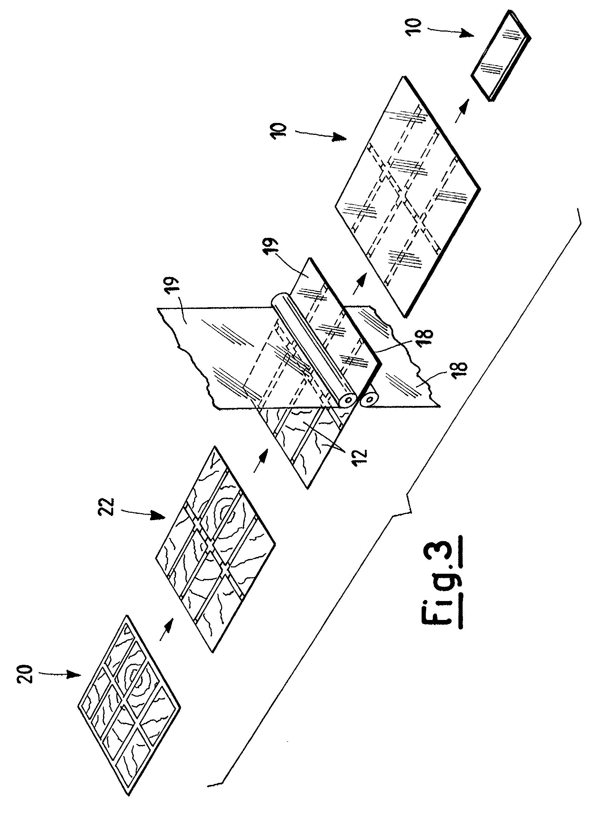

Un procédé de réalisation de cette carte 10 est celui montré de façon schématique dans la figure 3.

On part d'une feuille 20 en papier ou en carton ou en un matériau pouvant être imprimé d'une quelconque façon, où est imprimée une représentation d'indications topographiques d'un lieu déterminé d'une façon disjointe, ce qui revient à dire que la représentation complète est visible correctement en disposant les unes contre les autres les représentations partielles.

Chaque représentation partielle est délimitée par un rectangle de dimensions identiques à celles des parties 12 constituant la carte 10.

Les différents rectangles des représentations partielles sont espacés entre eux par des espaces identiques aux espaces intermédiaires 14 verticaux et horizontaux des parties 12 de la carte 10.

Ensuite, une pré-découpeuse découpe la feuille 20 de façon à séparer les parties 12 de la carte 10 et les éléments de liaison 16 des parties 12 elles-mêmes.

En ce point, le prédécoupé 22 entre dans une machine de revêtement, où sont appliqués sur celui-ci le revêtement inférieur 18 et le revêtement supérieur 19.

On obtient ainsi la carte 10 revêtue, qui est ensuite pliée par une machine de pliage.

Le fonctionnement de la carte 10 pliante revêtue à production facilitée selon l'invention est évident à partir de ce qui a été décrit ci-dessus en se référant aux figures, et de ce qui est décrit en bref dans ce qui suit.

Les éléments de liaison 16 permettent essentiellement aux parties 12 de la carte 10 de rester en position préfixée durant le processus de réalisation de la carte 10 elle-même.

De cette façon, surtout lors du passage à l'intérieur de la machine de revêtement, les parties 12 rectangulaires restent exactement orthogonales entre elles, même avec une vitesse de chaîne de fabrication élevée.

On obtient par conséquent un positionnement correct et précis des parties 12 de la carte 10 les unes par rapport aux autres à une vitesse économiquement acceptable de la chaîne de production.

Il faut enfin faire remarquer que les espaces intermédiaires 14 peuvent être dimensionnés, de façon appropriée, de façon à être supérieurs ou égaux à la somme de l'épaisseur de l'une des parties 12 plus l'épaisseur du revêtement inférieur 18 et celle du revêtement supérieur 19, le tout multiplié par le nombre des parties 12.

De cette façon, par conséquent, la carte 10 peut être repliée selon une direction quelconque, qui peut également être différente de celle utilisée par le fabricant.

A partir de la description effectuée, les caractéristiques de la carte pliante revêtue à production facilitée qui fait l'objet de la présente invention sont évidentes, comme sont évidents ses avantages associés, parmi lesquels on rappelle les suivants :
- utilisation simple et fiable ;
- réduction importante des coûts de production, par rapport à la technique existante ;
- durée de vie moyenne de la carte supérieure à celle de la technique existante ;
- procédé de production simplifié.

Il est évident, finalement, que la carte pliante revêtue à production facilitée ainsi conçue est susceptible de subir de nombreuses modifications et variantes, rentrant toutes à l'intérieur de l'invention ; en outre, tous les détails peuvent être remplacés par des éléments techniquement équivalents. Dans la pratique, les matériaux utilisés, ainsi que les formes et les dimensions, peuvent être quelconques en fonction des exigences techniques.

Par conséquent, l'étendue de l'applicabilité de l'invention est délimitée par les revendications jointes.

## Revendications

1. Carte (10) pliante revêtue à production facilitée, **caractérisée en ce qu'**elle comprend une pluralité de parties (12) en forme de quadrilatère, dans laquelle, en disposant les unes contre les autres lesdites parties (12), on obtient une représentation complète, incluant des indications topographiques d'un lieu déterminé, lesdites parties (12) étant disposées avec des espaces intermédiaires (14) entre elles, lesdites parties (12) et lesdits espaces intermédiaires (14) étant recouverts d'un revêtement inférieur (18) et d'un revêtement supérieur (19) en matériau transparent, et **en ce que** lesdites parties (12) adjacentes sont réunies entre elles au moyen d'éléments de liaison (16).

2. Carte (10) selon la revendication 1, **caractérisée en ce que** lesdits éléments de liaison (16) sont des appendices ou des bretelles disposés en correspondance avec des sommets des parties (12) en forme de quadrilatère.

3. Carte (10) selon la revendication 1, **caractérisée en ce que** lesdits éléments de liaison (16) sont des appendices ou des bretelles disposés en correspondance avec le centre de bords des parties (12) en forme de quadrilatère.

4. Carte (10) selon la revendication 1, **caractérisée en ce que** lesdites parties (12) sont rectangulaires.

5. Carte (10) selon la revendication 1, **caractérisée en ce que** lesdites parties (12) sont en papier ou en carton ou en un matériau pouvant être imprimé d'une quelconque façon.

6. Carte (10) selon la revendication 1, **caractérisée en ce que** le matériau dudit revêtement supérieur (19) et dudit revêtement inférieur (18) est en polyéthylène.

7. Carte (10) selon la revendication 1, **caractérisée en ce que** lesdits espaces intermédiaires (14) ont des dimensions supérieures ou égales à la somme de l'épaisseur de l'une desdites parties (12) plus l'épaisseur dudit revêtement inférieur (18) et celle dudit revêtement supérieur (19), le tout multiplié par le nombre desdites parties (12).

8. Procédé de fabrication d'une carte (10) pliante revêtue, **caractérisé par** une pluralité de parties (12) en forme de quadrilatère, dans lequel, lorsque l'on dispose les unes contre les autres lesdites parties (12), on obtient une représentation complète, incluant des indications topographiques d'un lieu déterminé, lesdites parties (12) étant disposées avec un espace intermédiaire (14) entre elles, lesdites parties (12) et lesdits espaces intermédiaires (14) étant recouverts d'un revêtement inférieur (18) et d'un revêtement supérieur (19) en matériau transparent, et en ce que le procédé comprend au moins une phase d'impression sur une feuille (20) d'une représentation d'indications topographiques d'un lieu déterminé, au moins une phase de prédécoupe pour préparer à partir de ladite feuille (20) un prédécoupé (22), comprenant lesdites parties (12) en forme de quadrilatère de la carte (10) et des éléments de liaison (16) des parties (12) qui réunissent les parties (12) adjacentes, et au moins une phase de couverture dudit prédécoupé (22) avec ledit revêtement inférieur (18) et ledit revêtement supérieur (19).

9. Procédé de fabrication d'une carte (10) selon la revendication 6, **caractérisé en ce qu'**il comprend une phase suivante de pliage de ladite carte (10) le long desdits espaces intermédiaires (14).
